# EUROPÄISCHE PATENTSCHRIFT

(11) **EP 3 529 065 B1**
(45) Veröffentlichungstag und Bekanntmachung des Hinweises auf die Patenterteilung: **29.07.2026**
(21) Anmeldenummer: 17780403.6
(22) Anmeldetag: 06.10.2017
(51) Int. Cl.: B30B 11/00, B22F 3/03

(54) **PRESSENEINRICHTUNG**
PRESS DEVICE
DISPOSITIF DE COMPRESSION

(30) Priorität: 24.10.2016 DE 102016120195
(43) Veröffentlichungstag der Anmeldung: 28.08.2019
(73) Patentinhaber: Dorst Technologies GmbH & Co. KG, 82431 Kochel am See (DE)
(72) Erfinder: MENZEL, Roland, 82431 Kochel am See (DE); HÄLTERLEIN, Max, 82407 Haunshofen (DE); ROSSI, Martin, 82481 Mittenwald (DE)
(74) Vertreter: Meissner Bolte Partnerschaft mbB
(86) Internationale Anmeldenummer: PCT/EP2017/075438
(87) Internationale Veröffentlichungsnummer: WO 2018/077588

(56) Entgegenhaltungen:
- EP-A2- 1 346 821
- DE-A1- 102006 051 666
- DE-A1- 102009 004 620
- JP-A- 2001 252 798
- JP-A- 2006 150 362
- JP-A- 2011 235 349
- US-A- 5 906 837
- US-B1- 6 442 859

## Beschreibung

Die Erfindung betrifft eine Presseneinrichtung, insbesondere Metallpulverund/oder Keramikpulver-Presseneinrichtung nach Anspruch 1 und 2 sowie ein Verfahren zum Pulverpressen eines Pulverpressteils, insbesondere Keramikpulver-Pressteils und/oder Metallpulver-Pressteils.

Aus EP 1 346 821 A2 ist ein Wegmesssystem für eine Pulverpresse mit einem Ober- und Unterstempel bekannt, wobei Ober- und Unterstempel mit einer Matrize einer Matrizenplatte zusammenwirken und jeweils von einem Hydraulikzylinder betätigt werden. Mit dem Oberstempel sind auf diametral gegenüberliegenden Seiten zwei Arme verbunden, die mit zwei vertikalen Messlinealen zusammenwirken. Die Messlineale sind fest mit der Matrizenplatte verbunden. Mit Hilfe der Messlineale soll der Weg des Oberstempels relativ zur Matrizenplatte bestimmt werden. Mit Hilfe von zwei weiteren Messarmen am Unterstempel und zwei weiteren Messlinealen, die mit der Unterseite der Matrizenplatte verbunden sind, soll auch der Weg des Unterstempels relativ zur Matrizenplatte bestimmt werden. Insgesamt kann durch das Verfahren gemäß EP 1 346 821 A2 eine vergleichsweise hohe Positioniergenauigkeit erreicht werden. Das Verfahren erscheint jedoch vergleichsweise komplex und damit auch wieder antallig tur Ungenauigkeiten. Weitere gattungsgemäße Presseneinrichtungen zeigen die US 6 442 859 B1 und die DE 10 2009 004620 A1.

Es ist daher Aufgabe der vorliegenden Erfindung, eine Presseneinrichtung, insbesondere eine Metallpulver- und/oder Keramikpulver-Presseneinrichtung vorzuschlagen, bei der die Position eines Pressstempels auf einfache Art und Weise und möglichst präzise bestimmt werden kann.

Diese Aufgabe wird durch die Merkmale des Anspruchs 1 und 2 gelöst.

Ein Kerngedanke der Erfindung liegt darin, dass zunächst durch die Messelemente (die entsprechend mit den Stempeln verbunden oder verbindbar sind) die Position (direkt) an den Stempeln abgegriffen wird, wobei die Sensoreinrichtung eine Relativposition der Messelemente (unmittelbar) bestimmt. Daraus lässt sich auf einfache Art und Weise eine Position des ersten Stempels in Bezug zum zweiten Stempel ableiten. Dadurch wird es auf einfache Art und Weise ermöglicht, letztlich das für die Formgebung des Pressteils entscheidende Volumen zwischen erstem und zweitem Stempel genau zu bestimmen, so dass die Presseneinrichtung exakt gesteuert werden kann. Dabei wurde erfindungsgemäß auch erkannt, dass bei einer Verbindung der Messelemente (unmittelbar) mit den jeweiligen Stempeln eine besonders exakte Positionsbestimmung der Stempel (und letztlich des Volumens zwischen den Stempeln) erfolgen kann. Insbesondere kann dadurch der Einfluss einer Stauchung der Pressstempel (und sonstiger im Kraftfluss liegender Teile, wie einer Stempelbasis, einem Werkzeugträger und dergleichen) minimiert werden. Beim Abgreifen einer Position beispielsweise an einer Stempelbasis kann der Fehler aus einer derartigen Stauchung mehrere Millimeter (ggf. bis zu 3 mm) betragen. Dies liegt daran, dass eine Stauchung nur bedingt erfassbar ist, wenn die Position weit entfernt von einer letztlich mit dem Pressteil in Kontakt kommenden Fläche des Stempels abgegriffen wird. Weiterhin können thermische Einflüsse eine erhebliche Längenänderung des Stempels (von ca. 0,1 bis 0,2 mm) zur Folge haben. Ursache dafür ist insbesondere die an den Pressstempeln durch Reibung entstehende Wärme. Diese eben beschriebenen Phänomene wurden als Hauptursache für Schwierigkeiten bei der Produktion von Pressteilen beim Pulverpressen erkannt. Gegenwärtig erfordern diese Phänomene eine ständige Nachjustierung und Einstellung der Pressteile, was mit einem großen zeitlichen Aufwand verbunden ist.

Ein Kerngedanke des zweiten Aspekts liegt darin, dass die Position im Inneren des ersten Stempels abgegriffen wird. Dadurch wird zum einen ein Fehler durch die oben genannten Phänomene reduziert. Zum anderen werden auch Fehler reduziert, die bei einer (wenn auch nur minimalen) Verkippung oder Schrägstellung des Stempels entstehen. Insgesamt wird auf einfache Art und Weise eine präzise Bestimmung der Position des ersten Stempels ermöglicht.

Vorzugsweise liegt eine erste Verbindungsstelle zwischen erstem Messelement und erstem Stempel in einer der Matrize (bzw. dem zweiten Stempel) zugewandten Hälfte des ersten Stempels, insbesondere in einem der Matrize (dem zweiten Stempel) zugewandten Drittel des ersten Stempels, vorzugsweise in einem der Matrize (dem zweiten Stempel) zugewandten Viertel des ersten Stempels, weiter vorzugsweise in einem der Matrize (dem zweiten Stempel) zugewandten Zehntel des ersten Stempels. Unter einem der Matrize (dem zweiten Stempel) zugewandten n-tel soll ein Abschnitt des Stempels verstanden werden, der der Länge nach einem n-ten Bruchteil der Gesamtlänge des Stempels entspricht und das mit dem Pulver-Pressteil in Kontakt kommende Ende des Stempels umfasst. Alternativ oder zusätzlich kann eine zweite Verbindungsstelle zwischen zweitem Messelement und zweitem Stempel in einer der Matrize (bzw. dem ersten Stempel) zugewandten Hälfte, insbesondere einem der Matrize (dem ersten Stempel) zugewandten Drittel des zweiten Stempels, vorzugsweise in einer der Matrize (dem ersten Stempel) zugewandten Viertel des zweiten Stempels, weiter vorzugsweise in einer der Matrize (dem ersten Stempel) zugewandten Zehntel des zweiten Stempels, liegen. Im Allgemeinen wird durch eine Positionierung des Messelementes (bzw. einer Verbindungsstelle zwischen Messelement und dem entsprechenden Stempel) vergleichsweise nahe an dem Ende des Stempels, das mit dem Pressteil in Berührung kommt, der Einfluss der oben genannten Phänomene (insbesondere Stauchung sowie thermische Einflüsse) erheblich reduziert, so dass eine äußerst präzise Messung erreicht werden kann.

Vorzugsweise ist das erste Messelement mit dem ersten Stempel verlötet und/oder verschraubt und/oder über eine Klemmeinrichtung verbunden. Das zweite Messelement kann fest mit dem zweiten Stempel verbunden sein, insbesondere mit dem zweiten Stempel verlötet sein. Vorzugsweise ist das zweite Messelement jedoch gegenüber dem zweiten Stempel (grundsätzlich) beweglich, wobei das zweite Messelement während des Pressvorgangs vorzugsweise positionsfest, insbesondere aufgrund des Zusammenwirkens über zwei miteinander korrespondierende Anschläge, mit dem zweiten Stempel (temporär) verbunden (verbindbar) ist. Insbesondere ist das zweite Element so gegenüber dem zweiten Stempel beweglich, dass ein dem ersten Stempel zugewandtes Ende des zweiten Messelementes über eine dem ersten Stempel zugewandte Fläche der Matrize (ggf. über die Endfläche eines Mittelstifts hinaus) bewegt werden kann. In jedem Fall wird durch ein bewegliches zweites Messelement eine einfache und präzise Messung ermöglicht. Beispielsweise kann das zweite Messelement vergleichsweise nahe gegenüber dem ersten Messelement positioniert werden, so dass der Abstand zwischen erstem und zweitem Messelement vergleichsweise einfach ausgemessen werden kann (zur Positions- und letztlich Wegmessung). Dennoch kann ein störender Einfluss dadurch reduziert werden, dass das bewegliche zweite Messelement auch wieder aus einem Einfüllbereich (oberhalb der Matrize beispielsweise) hinausbewegt werden kann. Insbesondere kann das zweite Messelement also beim Einfüllen des Pulvers nach unten bewegt werden und beim Pressen (und/oder kurz vor Einleiten des Pressvorgangs) nach oben.

In einer konkreten Ausführungsform umfasst die Sensoreinrichtung einen Kontaktsensor, der vorzugsweise einen beweglich gelagerten, weiter vorzugsweise teleskopartig herausfahrbaren Kontaktstift aufweist. Der Kontaktsensor kann am und/oder im ersten Stempel angeordnet sein. Unter einem "Kontaktsensor" ist insbesondere ein Sensor zu verstehen, der durch berührendes Fühlen einen Abstand zwischen erstem und zweitem Messelement (insbesondere eine Änderung des Abstands zwischen erstem und zweitem Messelement) bestimmen lässt. Alternativ zu einem Kontaktsensor könnte auch ein kontaktloser Sensor (wie beispielsweise ein optischer Sensor) zum Einsatz kommen. Über einen Kontaktsensor lässt sich jedoch zuverlässig und robust eine Position (bzw. Positionsänderung) bestimmen, so dass mit einfachen Mitteln eine hohe Messgenauigkeit erreicht wird.

Innerhalb des ersten und/oder zweiten Stempels (zumindest abschnittsweise), insbesondere innerhalb des zweiten Stempels (zumindest abschnittsweise) kann ein (insbesondere verfahrbarer) Mittelstift angeordnet sein. Innerhalb des ersten und/oder zweiten Stempels kann (zumindest abschnittsweise), insbesondere innerhalb des zweiten Stempels (zumindest abschnittsweise), vorzugsweise innerhalb des Mittelstifts, kann ein (insbesondere verfahrbarer) Messstift angeordnet sein. Über einen derartigen Mittelstift kann auf einfache Art und Weise eine Ausnehmung im Pressteil erzeugt werden. Insbesondere, wenn der Messstift (zumindest abschnittsweise) innerhalb des Mittelstifts angeordnet ist, kann auf einfache Art und Weise eine ohnehin vorgesehene Struktur ausgenutzt werden, um den Messstift anzuordnen und unterzubringen. Im Allgemeinen wird durch eine Anordnung innerhalb des Stempels eine hohe Genauigkeit (vor allem bei, wenn auch nur geringen, Schrägstellungen oder Verkippung des Stempels) der Messung erreicht.

Der Messstift kann über einen vorzugsweise hydraulischen und/oder pneumatischen und/oder elektrischen Antrieb verfahrbar sein. Im Allgemeinen ist der Messstift unabhängig vom Antrieb des ersten und/oder zweiten Stempels bewegbar. Weiterhin kann der Messstift einen Anschlag aufweisen, der insbesondere beim Pressvorgang mit einem korrespondierenden Anschlag des zweiten Stempels und/oder des Mittelstiftes in Eingriff bringbar ist. Durch das Vorsehen derartiger Anschläge kann auf einfache Art und Weise eine zwangsweise vorbestimmte Position des Messstiftes erreicht werden, so dass die Bestimmung der Relativposition zwischen erstem und zweitem Stempel besonders einfach ist.

Der Mittelstift kann (mindestens) eine, insbesondere schlitzförmige, Aussparung aufweisen, derart, dass (mindestens) ein Anschlagselement des Messstiftes den Mittelstift durchdringt, so dass das Anschlagselement des Messstiftes an einen Anschlag des zweiten Stempels anschlagen kann. Damit wird auf konstruktiv einfache Art und Weise eine Fixierung der Relativposition von Messstift und entsprechendem Stempel erreicht. Dennoch bleibt der Messstift grundsätzlich gegenüber dem Stempel beweglich (kann eben jedoch positionsfest angeordnet bzw. mit diesem verbunden werden).

Vorzugsweise ist das erste Messelement zumindest abschnittsweise innerhalb des ersten Stempels angeordnet oder anordenbar, vorzugsweise mit einer Innenwand des ersten Stempels verbunden oder verbindbar. Das zweite Messelement kann zumindest abschnittsweise innerhalb des zweiten Stempels angeordnet oder anordenbar sein, insbesondere mit einer Innenwand des zweiten Stempels verbunden oder verbindbar sein. Durch eine derartige Anordnung wird die Genauigkeit der Messung mit einfachen Mitteln verbessert (insbesondere im Hinblick auf, wenn auch nur minimale, Schrägstellungen oder Verkippungen des entsprechenden Stempels).

Der erste und/oder zweite Stempel zum Pressen des Pressteils kann verfahrbar ausgebildet sein. Der zweite Stempel kann beim Pressen des Pressteils gegebenenfalls positionsfest bleiben.

Vorzugsweise ist mindestens eine Steuereinrichtung, insbesondere Regeleinrichtung, zur Steuerung, insbesondere Regelung, der Bewegung des ersten und/oder zweiten Stempels, insbesondere während eines Pressvorgangs, vorgesehen. Die Steuereinrichtung kann drahtlos (z. B. über eine Funkverbindung) oder über eine Signal-Leitung mit der Messeinrichtung verbunden sein, so dass Messwerte der Messeinrichtungen in der Steuereinrichtung weiterverarbeitet werden können. Dadurch kann eine präzise Regelung des Pressvorgangs erreicht werden. Im Allgemeinen kann aus der Bestimmung der Position die Bestimmung eines (zurückgelegten) Weges des ersten und/oder des zweiten Stempels ermittelt werden (insbesondere relativ zueinander). Dies kann entweder bereits durch die Messeinrichtung durchgeführt werden oder durch die obige (oder eine zusätzliche) Steuereinrichtung. Insgesamt wird die Bedienung der Presseneinrichtung erleichtert und gleichzeitig ein präzises Einstellen der Stempel zueinander ermöglicht.

Der erste Stempel ist vorzugsweise ein Oberstempel. Der zweite Stempel ist vorzugsweise ein Unterstempel.

Die Presseneinrichtung kann vorzugsweise mindestens zwei (vorzugsweise koaxial angeordnete) erste Stempel, insbesondere Oberstempel, und/oder mindestens zwei (vorzugsweise koaxial angeordnete) zweite Stempel, insbesondere Unterstempel, aufweisen. Erstes und/oder zweites Messelement ist/sind vorzugsweise an und/oder in dem jeweils inneren (vorzugsweise innersten) ersten Stempel bzw. inneren (vorzugsweise innersten) zweiten Stempel angeordnet. Wenn beispielsweise (mindestens) drei Ober- und/oder Unterstempel vorgesehen sind, ist das jeweilige Messelement vorzugsweise in dem innersten der drei Stempel angeordnet (kann jedoch alternativ auch in dem mittleren Stempel angeordnet sein, der gegenüber dem äußersten Stempel ein "innerer" Stempel ist).

Weiterhin können mindestens zwei erste Stempel, insbesondere Oberstempel, und/oder mindestens zwei zweite Stempel, insbesondere Unterstempel, vorgesehen sein, wobei erstes und/oder zweites Messelement vorzugsweise an und/oder in dem jeweils längeren (insbesondere jeweils längsten) ersten Stempel bzw. längeren (insbesondere längsten) zweiten Stempel angeordnet ist/sind. Dadurch wird die oben beschriebene Längenänderung besonders effektiv kompensiert.

Die obige Aufgabe wird weiterhin gelöst durch ein Verfahren zum Pulverpressen eines Pulverpressteils, insbesondere Keramikpulver-Pressteils und/oder Metallpulver-Pressteils, unter Verwendung einer Presseneinrichtung der oben beschriebenen Art. Dabei wird durch die Messeinrichtung eine Position des ersten und/oder zweiten Stempels, insbesondere eine Relativposition der beiden Stempel zueinander, gemessen und der erste und/oder zweite Stempel, insbesondere beim Pressen, abhängig von diesem Ergebnis bewegt. Durch die Messeinrichtung oder eine (insbesondere die oben beschriebene) Steuereinrichtung kann aus der Positionsmessung eine Wegmessung (also Position in Abhängigkeit von der Zeit) durchgeführt werden.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Figur 1: eine Pulverpresse gemäß einem Vergleichsbeispiel;
- Figur 2: eine Pulverpresse gemäß einem ersten Ausführungsbeispiel der Erfindung;
- Figur 3: einen Ausschnitt der Ausführungsformen gemäß Figur 2 mit einzelnen Details;
- Figur 4: den Ausschnitt gemäß Figur 3 in der Füllstellung;
- Figur 5: den Ausschnitt gemäß Figur 3 kurz vor Beginn des Pressens;
- Figur 6: den Ausschnitt gemäß Figur 3 während des Pressens;
- Figur 7: den Ausschnitt gemäß Figur 3 während eines Entformens;
- Figur 8: den Ausschnitt gemäß Figur 3 gemäß einer modifizierten Ausführungsform der Presseneinrichtung (schematisch);
- Figur 9: einen Ausschnitt einer zweiten Ausführungsform der Presseneinrichtung;
- Figur 10: einen radialen Schnitt durch die Ausführungsform gemäß Figur 9;
- Figur 11: einen Stempel gemäß der Ausführungsform nach Figur 9;
- Figur 12: eine schematische Ansicht einer weiteren Ausführungsform der Presseneinrichtung; und
- Figur 13: einen Stempel mit Messeinrichtung gemäß einem weiteren Ausführungsbeispiel der Presseneinrichtung.

In der nachfolgenden Beschreibung werden für gleiche und gleichwirkende Teile dieselben Bezugsziffern verwendet.

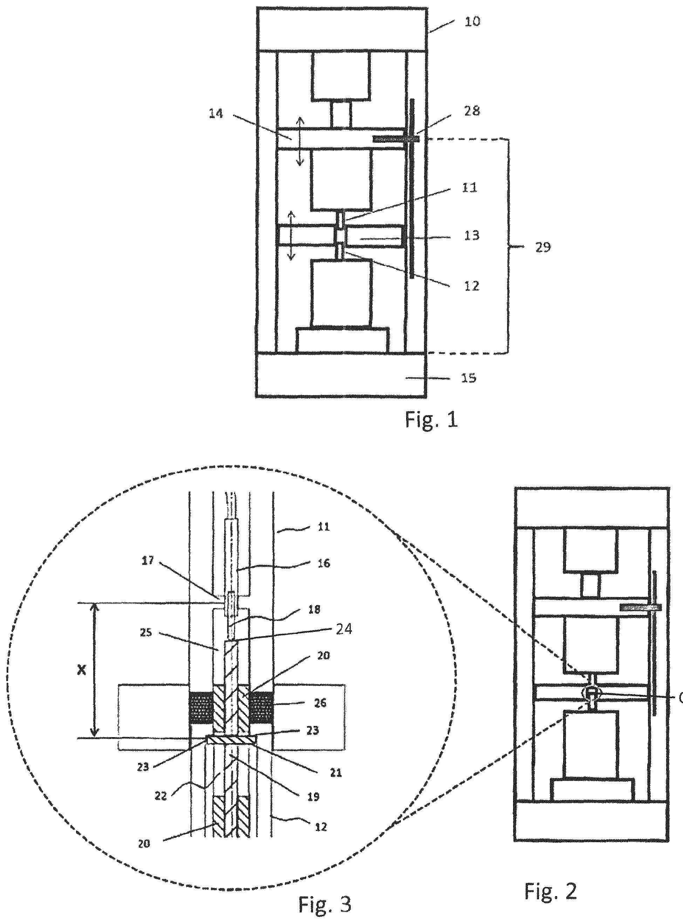

Figur 1 zeigt eine schematische Ansicht eines Vergleichsbeispiels für eine Presseneinrichtung. Diese Presseneinrichtung umfasst einen Pressenrahmen 10 sowie einen Oberstempel (ersten Stempel) 11 und einen Unterstempel (zweiten Stempel) 12. Zwischen Oberstempel 11 und Unterstempel 12 kann Pulver zum Pressen eines Pressteils eingefüllt werden, und zwar in einen Raum, der durch eine Matrize 13 begrenzt wird. Wie auch in der nachfolgenden Figur 2, ist nur ein Oberstempel 11 sowie nur ein Unterstempel 12 dargestellt. Es können jedoch auch mehrere (insbesondere koaxiale, ggf. aber auch nicht-koaxiale) Oberstempel 11 und mehrere (insbesondere koaxiale, ggf. aber auch nicht-koaxiale) Unterstempel 12 vorgesehen sein. Diese können, wie beispielsweise in DE 102 54 656 B4 oder DE 10 2010 051 513 A1, zum Hinfahren an bzw. in die Matrize und zum Pressen bewegt und angetrieben werden. Weiterhin ist eine Messeinrichtung 28 zum Messen einer Position (und daraus eines Weges) des Oberstempels vorgesehen. Konkret wird dazu eine Position an einer Stempelbasis 14 abgegriffen und gegenüber einer (unteren) Traverse 15, die einen Abstand 29 gegenüber der Stempelbasis 14 aufweist, vermessen. Die Stauchung zwischen Stempelbasis 14 und Traverse 15 kann (je nach Stempellänge) mehrere Millimeter (ggf. bis zu 3 mm) betragen. Dadurch ist die tatsächliche Stempelposition (bzw. eine Position eines mit dem Pressteil in Berührung kommenden Abschnitts des Stempels) nur ungenau erfassbar. Insbesondere ein Stauchung (Längenänderung) im Bereich zwischen Stempelbasis 14 und Traverse 15 kann nicht erfasst werden. Daraus resultierende Ungenauigkeiten betreffend die Höhe des Pressteils können in einem Bereich bis zu ± 0,06 mm liegen. Ein weiterer Grund für mangelhafte Prozessqualität können thermische Einflüsse sein, die eine Längenänderung des Stempels von 0,1 bis 0,2 mm zur Folge haben können. Ursache dafür ist insbesondere die an den Stempeln durch Reibung entstehende Wärme. Diese zwei Phänomene sind Hauptursache für Schwierigkeiten bei der Produktion beim Pulverpressen. Insbesondere ist es aufgrund dieser Phänomene nur unter großen Aufwand (hinsichtlich Kalibration et cetera) möglich, die Pressteile (absolut) rissfrei, mit möglichst gleichbleibender Dichte und Teilhöhe, zu produzieren. Bei der Lösung gemäß Figur 1 wird daher zu Produktionsbeginn eine aufwändige Nachjustierung und Einstellung der Pressteile durchgeführt, was mit einem hohen zeitlichen Aufwand verbunden ist.

Figur 2 zeigt eine Darstellung analog Figur 1 mit schematisch skizzierter erfindungsgemäßer Messeinrichtung. Details der Messung der Position (bzw. des Weges) können Figur 3 entnommen werden, die den Abschnitt C in Figur 2 vergrößert darstellt.

Im Vergleich zu dem Vergleichsbeispiel nach Figur 1 kann eine Positionserfassung bei der erfindungsgemäßen Messeinrichtung gemäß Figuren 2 und 3 (deutlich) näher am Pressteil erfolgen (was nicht ausschließt, dass auch hier für eine erste Positionierung eine Messeinrichtung 28 analog Fig. 1 vorgesehen ist, so dass ggf. erst kurz vor der Pressstellung die genaue Position durch das nachfolgend beschriene Messelement 16 erfasst wird). Der Abstand zwischen den relativ zueinander vermessenen Messpunkten (zwischen denen eine Stauchung bzw. eine Längenänderung aufgrund von Temperaturunterschieden zwar auftreten kann, jedoch nicht gemessen werden kann) ist gemäß Figuren 2 und 3 (um ein Vielfaches) kleiner als beim System gemäß Figur 1. Dadurch kann eine Steigerung der Genauigkeit (ggf. um den Faktor 10 oder mehre oder sogar um den Faktor 20 oder mehr) ermöglicht werden.

Gemäß Figur 3 ist innerhalb des Oberstempels ein erstes Messelement 16 vorgesehen, das fest (an einer ersten Verbindungsstelle 17) mit dem Oberstempel 11 verbunden ist. An diesem ersten Messelement 16 ist ein beweglicher Stift 18 angeordnet, der einem Kontaktsensor zugeordnet ist. Dazu (nicht im Einzelnen gezeigt) kann ein Verfahrweg des beweglichen Stifts 18 gegenüber dem ersten Messelement 16 bei einer Annäherung an ein zweites Messelement 19 (Messstift) berechnet werden (und daraus eine Annäherung von Oberstempel gegenüber Unterstempel). Das zweite Element (Messstift 19) ist innerhalb eines Mittelstifts 20 geführt. Anschlagelemente 21 des zweiten Messelements 19 sind innerhalb von schlitzförmigen Aussparungen 22 des Mittelstifts 20 bewegbar, so dass es (wie in Figur 3 gezeigt) an einen korrespondierenden Anschlag 23 (der konkret durch eine Stufe ausgebildet sein kann) des Unterstempels 12 anschlagen kann. Durch die Ermöglichung dieses Anschlags ist eine vorbestimmte Relativposition von dem ersten, dem Oberstempel 11 zugewandten Ende 24, des zweiten Messelements 19 gegenüber dem Unterstempel 12 bekannt. Insbesondere in der Pressstellung ist der Unterstempel 12 mit dem zweiten Messelementen 19 (positionsfest) verbunden bzw. in Kontakt.

Der Anschlag 23 wird vorzugsweise durch eine Anschlagkante gebildet. Die Anschlagelemente 21 können durch radial vorstehende Stifte (Zylinderstifte) gebildet werden und an diese Kante anschlagen. Zur Aufnahme des ersten Messelementes 16 weist der Oberstempel 11 eine Aussparung 25 auf (insbesondere Bohrung). Wie Figur 3 entnommen werden kann, ist ein Abstand X zwischen dem Anschlag 23 im Unterstempel 12 und der Verbindungsstelle 17 (Befestigung) des ersten Messelementes 16 im Oberstempel 11 vergleichsweise klein. Außerhalb dieses Bereichs wird also eine Längenänderung des Stempels infolge der Stauchung und Erwärmung schon durch die Messung per se kompensiert. Durch das Bezugszeichen 26 wird ein zu pressendes Pressteil 26 gekennzeichnet.

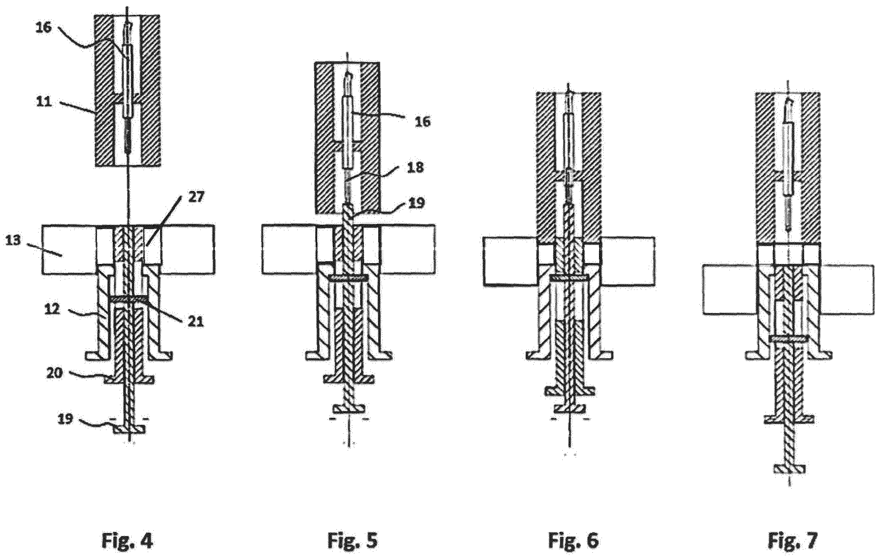

In den Figuren 4 bis 7 ist ein Presszyklus unter Verwendung der erfindungsgemäßen Messeinrichtung dargestellt. In der Füllstellung gemäß Figur 4 ist das zweite Messelement 19 (Messstift) bündig mit dem Mittelstift 20 und der Matrize 13.

Das zweite Messelement 19 (Messstift 19) kann über einen (ggf. separat vorgesehen; ggf. pneumatischen und/oder hydraulischen und/oder elektrischen) Antrieb angetrieben (bewegt) werden. Dieser kann (fest) an einen Antrieb des Mittelstifts angebaut sein.

Eine Höhe des Anschlagselementes 21 (also ein Abstand zu einem dem Oberstempel zugewandten Ende) kann einstellbar angeordnet werden, so dass die Relativposition des zweiten Messelementes gegenüber dem Mittelstift 20 variiert werden kann.

Nachdem Pulver in eine Kavität 27 (sh. Figur 4) innerhalb der Matrize 13 gefüllt wurde, kann der Oberkolben 11 nach unten fahren. Vor (insbesondere kurz vor) Berührung mit dem Pulver kann ein erster Kontakt zwischen dem beweglichen Stift 18 und dem zweiten Messelement 19 erfolgen. Der Messstift kann dabei (durch den pneumatischen Antrieb) schon auf den Anschlag 23 des Unterstempels gedrückt sein. Ab diesem Zeitpunkt kann die Positionsbestimmung (bzw. Positionsregelung mit Hilfe eines Signals der Messeinrichtung) durchgeführt werden (sh. Figur 5).

Daraufhin wird das Pulver verdichtet (sh. Figur 6). Außerhalb der beiden Messpunkte (= Anschlagkante Unterstempel sowie Befestigung des ersten Messelementes) kann die Stauchung bzw. Erwärmung (mit entsprechender Längenänderung) kompensiert werden.

Beim Entformen (sh. Figur 7) können Mittelstift 20 und Messstift 19 nach unten fahren.

Insgesamt kann durch die Messeinrichtung gemäß Figuren 2 bis 7 der Einstellaufwand erheblich reduziert werden (oder sogar entfallen). Pressteilhöhe und Pressteildichte können über den (gesamten) Prozess hinweg konstant gehalten werden. Die Gefahr von Rissen im Pressteil kann minimiert werden.

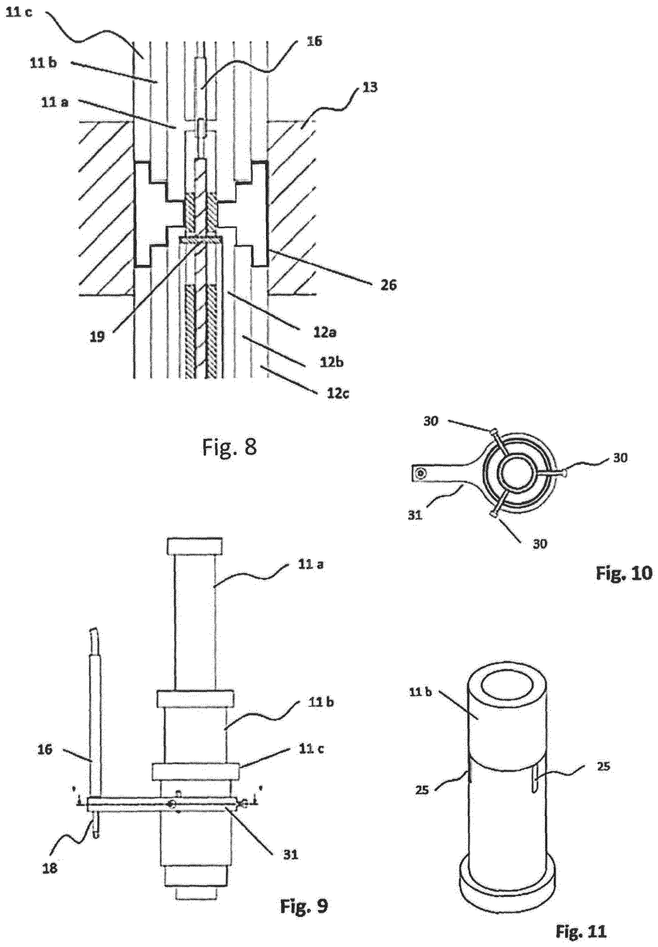

Figur 8 zeigt eine Modifikation der Ausführungsform gemäß Figur 3 in einem zu Figur 3 analogen Ausschnitt. In Ergänzung zur Ausführungsform nach Figur 3 sind drei (koaxiale) Oberstempel 11a, 11b und 11c sowie drei (koaxiale) Unterstempel 12a, 12b, 12c vorgesehen. In dieser Ausführungsform sind die Messelemente 16 und 19 jeweils innerhalb des innersten (längsten) Stempels 11a angeordnet.

Die Figuren 9 bis 11 zeigen eine alternative Ausführungsform der Messeinrichtung. Hier ist das erste Messelement 16 mit dem beweglichen Stift 18 nicht innerhalb eines Oberstempels angeordnet, sondern außerhalb (sämtlicher) Oberstempel 11a bis 11b. Dazu sind die weiter außen liegenden Stempel (11b, 11c, wie exemplarisch in Figur 11 dargestellt) geschlitzt ausgebildet. Die Position kann über Schrauben 30 auf einen äußeren Ring 31 übertragen werden. Der äußere Ring 31 ist mit dem ersten Messelement 16 verbunden, so dass die Position abgegriffen werden kann. Dazu ist (nicht im Detail in Figur 9 bis 11 dargestellt) am Unterstempel bzw. den mehreren Unterstempeln eine entsprechende Struktur vorgesehen, so dass (analog zur Ausführungsform gemäß Figuren 2 bis 8) eine Relativposition bzw. ein Weg gemessen werden kann, den der Oberstempel gegenüber dem Unterstempel (bzw. die mehreren Oberstempel gegenüber den mehreren Unterstempeln) zurücklegt. An Stelle der Schrauben 30 können andere Verbindungselemente vorgesehen sein. Diese Verbindungselemente müssen nicht drei sein, sondern können auch auf eines oder zwei beschränkt sein oder mehr als drei sein. Auch der äußere Ring 31 ist nicht unbedingt zwingend. Vorzugsweise ist jedoch mindestens ein Verbindungselement vorgesehen, das mit einem der Oberstempel bzw. Unterstempel (insbesondere mit einem inneren bzw. innersten Unterstempel bzw. Oberstempel) verbunden ist und nach außen führt und konkret mit dem ersten Messelement verbunden ist. Über den äußeren Ring 31 und insbesondere in Kombination mit mehreren Verbindungselementen (Schrauben) kann jedoch eine vergleichsweise zuverlässige Position des ersten Messelementes 16 gewährleistet werden. In der Ausführungsform gemäß den Figuren 9 bis 11 sind drei Oberstempel gezeigt. Es kann jedoch auch nur ein Oberstempel vorgesehen sein. Es können auch zwei, vier oder mehr Oberstempel vorgesehen sein. Analog kann mindestens ein Unterstempel, vorzugsweise mindestens zwei, weiter vorzugsweise mindestens drei Unterstempel vorgesehen sein. Die in Figur 11 gezeigten Aussparungen 25 müssen nicht zwingend schlitzförmig sein.

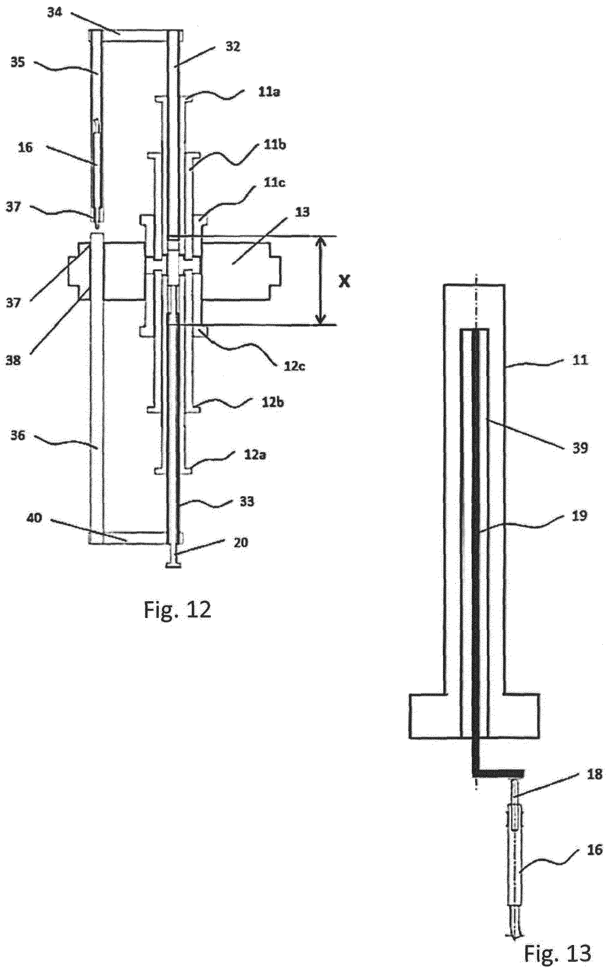

In Figur 12 ist eine weitere Ausführungsform der erfindungsgemäßen Presseinrichtung dargestellt. Auch hier sind drei Oberstempel 11a, 11b und 11c sowie drei Unterstempel 12a, 12b und 12c dargestellt (die Anzahl von Ober- und Unterstempeln ist jedoch in diesem Zusammenhang nicht zwingend auf drei beschränkt). Sowohl in den innersten Oberstempel 11a als auch in den innersten Unterstempel 12a ist ein erstes Rohr 32 (in den Oberstempel) bzw. ein zweites Rohr 33 (in den Unterstempel) eingebracht (eingelötet). Über eine erste Stange 34 (oder sonstiges Übertragungselement) wird das erste Rohr (an einem den zweiten Stempel abgewandten Ende des Rohres) mit einem ersten Übertragungselement 35 (das vorzugsweise parallel bzw. antiparallel zum ersten Rohr 32 verläuft) verbunden. Analog wird ein dem ersten Stempel abgewandtes Ende des zweiten Rohres 33 über eine zweite Stange (oder sonstiges Übertragungselement) mit einem (vorzugsweise parallel bzw. antiparallel zum zweiten Rohr 33 verlaufenden) zweiten Übertragungselement 36 verbunden. Einander zugewandte Enden 37 der Übertragungselemente 35, 36 können eine Positionsmessung erlauben. Dazu ist vorzugsweise ein beweglicher Stift (Messelement 16) innerhalb des ersten Übertragungselementes 35 angeordnet. Das zweite Übertragungselement 36 kann (wie in Figur 12 gezeigt) durch die Matrize 13 (insbesondere eine entsprechende Aussparung 38 innerhalb der Matrize 13) geführt werden. Die Rohre 32, 33 können auch anders ausgebildet sein (beispielsweise als Stangen oder sonstige Übertragungselemente). In jedem Fall kann ein dem zweiten Stempel zugewandtes Ende des ersten Rohres 32 fest mit dem ersten Stempel (insbesondere dem innersten ersten Stempel) verbunden sein. Analog kann ein dem ersten Stempel zugewandtes Ende des zweiten Rohres (Übertragungselementes) fest mit einem dem ersten Stempel zugewandten Ende des zweiten Stempels verbunden sein. Auch bei erster Stange 34 und/oder zweiter Stange 35 kann sich um beliebige (insbesondere radial verlaufende) Übertragungselemente handeln.

Figur 13 zeigt eine weitere Ausführungsform einer erfindungsgemäßen Messeinrichtung. Hier ist der Messstift 19 in eine Aussparung 39 (Bohrung) eines Stempels (beispielsweise Ober- und/oder Unterstempel) eingebracht. Insbesondere ist bei der Ausführungsform gemäß Fig. 13 sowohl dem Oberstempel als auch dem Unterstempel jeweils ein Messstift 19, ein Messelement 16 und ein beweglicher Stift 18 zugeordnet. Der Messstift ist hierbei (insbesondere an seinem dem anderen Stempel abgewandten Ende) fest mit dem einen Stempel verbunden (insbesondere in diesen eingelötet). Dieser Messstift 19 kann mit einem Messelement 16 und einem beweglichen Stift 18, wie in der Ausführungsform gemäß Figuren 2 bis 7 beschrieben, zusammenwirken.

### Bezugszeichen

- X: Abstand
- 10: Pressenrahmen
- 11: Oberstempel (erster Stempel)
- 12: Unterstempel (zweiter Stempel)
- 13: Matrize
- 14: Stempelbasis (bewegliche Traverse)
- 15: (untere) Traverse
- 16: Erstes Messelement (Sensor)
- 17: Erste Verbindungsstelle
- 18: Beweglicher Stift
- 19: Zweites Messelement
- 20: Mittelstift
- 21: Anschlagselement
- 22: (Schlitzförmige) Aussparung
- 23: Anschlag
- 24: Ende
- 25: Aussparung
- 26: Pressteil
- 27: Kavität
- 28: Messeinrichtung
- 29: Abstand
- 30: Schraube
- 31: (Äußerer) Ring
- 32: Erstes Rohr
- 33: Zweites Rohr
- 34: Erste Stange
- 35: Erstes Übertragungselement
- 36: Zweites Übertragungselement
- 37: Ende
- 38: Aussparung
- 39: Aussparung
- 40: Zweite Stange

## Patentansprüche

1. Pulver-Presseneinrichtung, insbesondere Metallpulver- und/oder Keramikpulver-Presseneinrichtung, umfassend mindestens
einen ersten Stempel (11), der in einer Pressstellung von einer ersten Seite aus in eine mit Keramik- und/oder Metallpulver befüllte Matrizenöffnung einer Matrize (13) eintauchbar angeordnet ist und
mindestens einen zweiten Stempel (12), der in der Pressstellung von einer zweiten Seite aus in die mit Keramik- und/oder Metallpulver befüllte Matrizenöffnung der Matrize (13) eintauchbar angeordnet ist, sowie eine Positionsmesseinrichtung zur Bestimmung einer Position des ersten Stempels (11), wobei die Positionsmesseinrichtung zumindest ein erstes Messelement (16), ein zweites Messelement (19) sowie eine Sensoreinrichtung umfasst,
**dadurch gekennzeichnet, dass**
das erste Messelement (16) mit dem ersten Stempel (11) verbunden ist und das zweite Messelement (19) mit dem zweiten Stempel (12) verbunden ist, so dass sich eine Relativposition der Messelemente (16, 19) zueinander während des Pressvorgangs ändert, wobei die Sensoreinrichtung zur unmittelbaren Bestimmung der Änderung der Relativposition ausgebildet ist.

2. Pulver-Presseneinrichtung, insbesondere Metallpulver- und/oder Keramikpulver-Presseneinrichtung, umfassend mindestens einen ersten Stempel (11), nämlich oberen Stempel, der in einer Pressstellung von einer ersten Seite aus in eine mit Keramik- und/oder Metallpulver befüllte Matrizenöffnung einer Matrize (13) eintauchbar angeordnet ist,
vorzugsweise mindestens einen zweiten Stempel (12), der in der Pressstellung von einer zweiten Seite aus in die mit Keramik- und/oder Metallpulver befüllte Matrizenöffnung der Matrize (13) eintauchbar angeordnet ist,
**gekennzeichnet durch**
eine Positionsmesseinrichtung zur Bestimmung einer Position des ersten Stempels (11), wobei die Positionsmesseinrichtung zumindest ein erstes Messelement (16) sowie eine Sensoreinrichtung zur unmittelbaren Bestimmung der Position des ersten Messelementes (16) umfasst,
wobei das erste Messelement (16) mit dem ersten Stempel (11) unmittelbar festverbunden ist, wobei das erste Messelement (16) zumindest abschnittsweise innerhalb des ersten Stempels (11) angeordnet oder anordenbar ist, insbesondere mit einer Innenwand des ersten Stempels (11) verbunden ist.

3. Presseneinrichtung nach Anspruch 1 oder 2,
**dadurch gekennzeichnet, dass**
eine erste Verbindungsstelle (17) zwischen erstem Messelement (16) und erstem Stempel (11) in einer der Matrize (13) zugewandten Hälfte, insbesondere in einem der Matrize zugewandten Drittel (11) des ersten Stempels liegt und/oder
eine zweite Verbindungsstelle zwischen zweitem Messelement (19) und zweitem Stempel (12) in einer der Matrize (13) zugewandten Hälfte, insbesondere in einem der Matrize zugewandten Drittel des zweiten Stempels (12) liegt.

4. Presseneinrichtung nach einem der vorangehenden Ansprüche 1 oder 3,
**dadurch gekennzeichnet, dass**
das erste Messelement (16) fest mit dem ersten Stempel (11) verbunden ist, insbesondere mit dem ersten Stempel (11) verlötet und/oder verschraubt und/oder über eine Klemmeinrichtung verbunden ist.

5. Presseneinrichtung nach einem der vorangehenden Ansprüche,
**dadurch gekennzeichnet, dass**
das zweite Messelement (19) fest mit dem zweiten Stempel (12) verbunden ist, insbesondere mit dem zweiten Stempel (12) verlötet ist.

6. Presseneinrichtung nach einem der vorangehenden Ansprüche 1 bis 4,
**dadurch gekennzeichnet, dass**
das zweite Messelement (19) gegenüber dem zweiten Stempel (12) beweglich ist, jedoch zumindest während des Pressvorgangs positionsfest, insbesondere über zwei miteinander korrespondierende Anschläge (21, 23), mit dem zweiten Stempel (12) verbindbar ist.

7. Presseneinrichtung nach einem der vorhergehenden Ansprüche,
**dadurch gekennzeichnet, dass**
die Sensoreinrichtung einen Kontaktsensor umfasst, der vorzugsweise einen beweglich gelagerten, weiter vorzugsweise teleskopartig herausfahrbaren Kontaktstift (18) aufweist,
wobei der Kontaktsensor vorzugsweise am und/oder im ersten Stempel (11) angeordnet ist.

8. Presseneinrichtung nach einem der vorhergehenden Ansprüche,
**dadurch gekennzeichnet, dass**
innerhalb des ersten (11) und/oder zweiten (12) Stempels, insbesondere innerhalb des zweiten (12) Stempels ein Mittelstift (20) angeordnet ist.

9. Presseneinrichtung nach einem der vorhergehenden Ansprüche,
**dadurch gekennzeichnet, dass**
innerhalb des ersten (11) und/oder zweiten (12) Stempels, insbesondere innerhalb des zweiten Stempels (12), vorzugsweise innerhalb des Mittelstifts (20) ein Messstift (19) angeordnet ist.

10. Presseneinrichtung Anspruch 9,
**dadurch gekennzeichnet, dass**
der Messstift (19) über einen vorzugsweise hydraulischen und/oder pneumatischen und/oder elektrischen Antrieb verfahrbar ist und/oder einen Anschlag (21) aufweist, der insbesondere beim Pressvorgang mit einem korrespondierenden Anschlag (23) des zweiten Stempels (12) und/oder des Mittelstiftes (20) in Eingriff bringbar ist.

11. Presseneinrichtung Anspruch 9 oder 10,
**dadurch gekennzeichnet, dass**
der Mittelstift mindestens eine, insbesondere schlitzförmige, Aussparung (22) aufweist derart, dass mindestens ein Anschlagselement (21) des Messstiftes (19) den Mittelstift (20) durchdringen kann, so dass das Anschlagselement (21) des Messstiftes an einen Anschlag (23) des zweiten Stempels anschlagen kann.

12. Presseneinrichtung nach einem der vorhergehenden Ansprüche,
**dadurch gekennzeichnet, dass**
das erste Messelement (16) zumindest abschnittsweise innerhalb des ersten Stempels (11) angeordnet oder anordenbar ist, insbesondere mit einer Innenwand des ersten Stempels (11) verbunden oder verbindbar ist und/oder das zweite Messelement (19) zumindest abschnittsweise innerhalb des zweiten Stempels (12) angeordnet oder anordenbar ist, insbesondere mit einer Innenwand des zweiten Stempels (12) verbunden oder verbindbar ist.

13. Presseneinrichtung nach einem der vorhergehenden Ansprüche,
**dadurch gekennzeichnet, dass**
der erste (11) und/oder zweite (12) Stempel zum Pressen des Pressteils verfahrbar ist/sind und/oder der zweite Stempel beim Pressen des Pressteils positionsfest bleibt.

14. Presseneinrichtung nach einem der vorhergehenden Ansprüche,
**dadurch gekennzeichnet, dass**
mindestens eine Steuereinrichtung, insbesondere Regeleinrichtung, zur Steuerung, insbesondere Regelung, der Bewegung des ersten (11) und/oder zweiten (12) Stempels, insbesondere während eines Pressvorgangs, vorgesehen ist.

15. Presseneinrichtung nach einem der vorhergehenden Ansprüche,
**dadurch gekennzeichnet, dass**
der erste Stempel (11) ein Oberstempel (11) und/oder der zweite Stempel (12) ein Unterstempel (12) ist.

16. Presseneinrichtung nach einem der vorhergehenden Ansprüche,
**dadurch gekennzeichnet, dass**
mindestens zwei erste Stempel (11a, 11b, 11c) vorgesehen sind, wobei das erste Messelement (16) vorzugsweise an und/oder in einem jeweils inneren und/oder längeren ersten Stempel (11a) angeordnet ist.

17. Presseneinrichtung nach einem der vorhergehenden Ansprüche,
**dadurch gekennzeichnet, dass**
mindestens zwei zweite Stempel (12a, 12b, 12c), insbesondere Unterstempel vorgesehen sind, wobei das zweite Messelement (19) vorzugsweise an und/oder in einem jeweils inneren und/oder längeren zweiten Stempel (12a) angeordnet ist.

18. Verfahren zum Pulververpressen eines Pulverpressteils, insbesondere Keramikpulver-Pressteils und/oder Metallpulver-Pressteils, unter Verwendung einer Presseneinrichtung nach einem der vorhergehenden Ansprüche,
**dadurch gekennzeichnet, dass**
durch die Messeinrichtung eine Position des ersten (11) und/oder zweiten (12) Stempels, insbesondere eine Relativposition der beiden Stempel (11, 12) zueinander gemessen wird und abhängig von diesem Ergebnis der erste (11) und/oder zweite (12) Stempel, insbesondere beim Pressen, bewegt wird.

## Claims

1. Powder pressing device, in particular a metal powder and/or ceramic powder pressing device, comprising at least a first punch (11), which is arranged so as to be able to penetrate, from a first side, into a die opening of a die (13) filled with ceramic and/or metal powder when in the pressing position, and at least a second punch (12), which is arranged so as to be able to penetrate from a second side into the die opening of the die (13) filled with ceramic and/or metal powder when in the pressing position, as well as a position measuring device for determining a position of the first punch (11), wherein the position measuring device comprises at least a first measuring element (16), a second measuring element (19), and a sensor device,
**characterized in that**
the first measuring element (16) is connected to the first punch (11) and the second measuring element (19) is connected to the second punch (12), such that a relative position of the measuring elements (16, 19) relative to one another changes during the pressing process, wherein the sensor device is configured to directly determine the change in relative position.

2. Powder pressing device, in particular a metal powder and/or ceramic powder pressing device, comprising at least a first punch (11), namely an upper punch, which is arranged so as to be able to penetrate from a first side into a die opening of a die (13) filled with ceramic and/or metal powder in a pressing position,
preferably at least a second punch (12), which is arranged so as to be able to penetrate from a second side into the die opening of the die (13) filled with ceramic and/or metal powder,
**characterized by** a position measuring device for determining a position of the first punch (11), wherein the position measuring device comprises at least a first measuring element (16) as well as a sensor device for directly determining the position of the first measuring element (16),
wherein the first measuring element (16) is directly fixedly connected to the first punch (11), wherein the first measuring element (16) is arranged or can be arranged at least in sections within the first punch (11), in particular is connected to an inner wall of the first punch (11).

3. Pressing device according to claim 1 or 2,
**characterized in that**
a first connection point (17) between the first measuring element (16) and the first punch (11) is located in a half facing the die (13), in particular in a third (11) of the first punch facing the die, and/or
a second connection point between the second measuring element (19) and the second punch (12) is located in a half of the second punch facing the die (13), in particular in a third of the second punch (12) facing the die.

4. Pressing device according to one of the preceding claims 1 or 3,
**characterized in that**
the first measuring element (16) is fixedly connected to the first punch (11), in particular soldered and/or screwed to the first punch (11) and/or connected via a clamping device.

5. Pressing device according to one of the preceding claims,
**characterized in that**
the second measuring element (19) is fixedly connected to the second punch (12), in particular is soldered to the second punch (12).

6. Pressing device according to one of the preceding claims 1 to 4,
**characterized in that**
the second measuring element (19) is movable relative to the second punch (12), but can be connected to the second punch (12) in a positionally fixed manner, in particular via two corresponding stops (21, 23), at least during the pressing process.

7. Pressing device according to one of the preceding claims,
**characterized in that**
the sensor device comprises a contact sensor, which preferably has a movably mounted contact pin (18) that is further preferably extendable telescopically, wherein the contact sensor is preferably arranged on and/or in the first punch (11).

8. Press device according to one of the preceding claims,
**characterized in that**
a center pin (20) is arranged within the first (11) and/or second (12) punch, in particular within the second (12) punch.

9. Pressing device according to one of the preceding claims,
**characterized in that**
a measuring pin (19) is arranged within the first (11) and/or second (12) punch, in particular within the second punch (12), preferably within the center pin (20).

10. Pressing device according to claim 9,
**characterized in that**
the measuring pin (19) is movable via a preferably hydraulic and/or pneumatic and/or electric drive and/or has a stop (21) which, particularly during the pressing process, can be brought into engagement with a corresponding stop (23) of the second punch (12) and/or the center pin (20).

11. Pressing device according to claim 9 or 10,
**characterized in that**
the center pin comprises at least one, in particular slot-shaped, recess (22) such that at least one stop element (21) of the measuring pin (19) can penetrate the center pin (20), so that the stop element (21) of the measuring pin can abut against a stop (23) of the second punch.

12. Pressing device according to one of the preceding claims,
**characterized in that**
the first measuring element (16) is arranged or can be arranged at least in sections within the first punch (11), in particular is connected or can be connected to an inner wall of the first punch (11), and/or the second measuring element (19) is arranged or can be arranged at least in sections within the second punch (12), in particular is connected or can be connected to an inner wall of the second punch (12).

13. Pressing device according to one of the preceding claims,
**characterized in that**
the first (11) and/or second (12) punch is/are movable for pressing the workpiece and/or the second punch remains fixed in position during the pressing of the workpiece.

14. Pressing device according to one of the preceding claims,
**characterized in that**
at least one control device, in particular a regulating device, is provided for controlling, in particular regulating, the movement of the first (11) and/or second (12) punch, in particular during a pressing operation.

15. Pressing device according to one of the preceding claims,
**characterized in that**
the first punch (11) is an upper punch (11) and/or the second punch (12) is a lower punch (12).

16. Pressing device according to one of the preceding claims,
**characterized in that**
at least two first punches (11a, 11b, 11c) are provided, wherein the first measuring element (16) is preferably arranged on and/or in a respective inner and/or longer first punch (11a).

17. Pressing device according to one of the preceding claims,
**characterized in that**
at least two second punches (12a, 12b, 12c), in particular lower punches, are provided, wherein the second measuring element (19) is preferably arranged on and/or in a respective inner and/or longer second punch (12a).

18. Method for powder compaction of a powder-compacted part, in particular a ceramic powder-compacted part and/or a metal powder-compacted part, using a pressing device according to one of the preceding claims,
**characterized in that**
a position of the first (11) and/or second (12) punch, in particular a relative position of the two punches (11, 12) to one another, is measured by the measuring device, and depending on this result, the first (11) and/or second (12) punch is moved, in particular during pressing.

## Revendications

1. Installation pour le pressage de poudres, en particulier installation pour le pressage de poudres métalliques et/ou de poudres de céramique, comprenant au moins un premier poinçon (11), qui est disposé de façon à pouvoir pénétrer par un premier côté dans une ouverture de matrice remplie de poudre de céramique et/ou de métal d'une matrice (13) dans une position de pressage et
au moins un deuxième poinçon (12) qui est disposé de façon à pouvoir pénétrer par un deuxième côté dans l'ouverture de matrice remplie de poudre de céramique et/ou de métal de la matrice (13) dans une position de pressage,
ainsi qu'une installation de mesure de la position destinée à déterminer une position du premier poinçon (11), laquelle installation de mesure de la position comprend au moins un premier élément de mesure (16), un deuxième élément de mesure (19) et une installation de capteurs,
**caractérisée en ce que** le premier élément de mesure (16) est relié au premier poinçon (11) et le deuxième élément de mesure (19) est relié au deuxième poinçon (12), de sorte qu'une position relative des éléments de mesure (16, 19) les uns par rapport aux autres change pendant l'opération de pressage, l'installation de capteurs étant conçue pour déterminer directement le changement de la position relative.

2. Installation pour le pressage de poudres, en particulier installation pour le pressage de poudres métalliques et/ou de poudres de céramique, comprenant au moins un premier poinçon (11), à savoir un poinçon supérieur, qui est disposé de façon à pouvoir pénétrer par un premier côté dans une ouverture de matrice remplie de poudre de céramique et/ou de métal d'une matrice (13) dans une position de pressage,
de préférence au moins un deuxième poinçon (12) qui est disposé de façon à pouvoir pénétrer par un deuxième côté dans l'ouverture de matrice remplie de poudre de céramique et/ou de métal de la matrice (13) dans une position de pressage,
**caractérisée en ce qu'**elle comporte une installation de mesure de la position destinée à déterminer une position du premier poinçon (11), laquelle installation de mesure de la position comprend au moins un premier élément de mesure (16) ainsi qu'une installation de capteurs pour la détermination directe de la position du premier élément de mesure (16),
dans laquelle le premier élément de mesure (16) est relié directement de façon fixe au premier poinçon (11), le premier élément de mesure (16) étant disposé ou pouvant être disposé au moins en partie à l'intérieur du premier poinçon (11), en particulier relié à une paroi intérieure du premier poinçon (11).

3. Installation de pressage selon la revendication 1 ou 2, **caractérisée en ce qu'**un premier point de liaison (17) entre le premier élément de mesure (16) et le premier poinçon (11) se trouve dans une moitié tournée vers la matrice (13), en particulier un tiers (11) tourné vers la matrice, du premier poinçon et/ou
un deuxième point de liaison entre le deuxième élément de mesure (19) et le deuxième poinçon (12) se trouve dans une moitié tournée vers la matrice (13), en particulier un tiers tourné vers la matrice, du deuxième poinçon (12).

4. Installation de pressage selon l'une des revendications 1 ou 3, **caractérisée en ce que** le premier élément de mesure (16) est relié de façon fixe au premier poinçon (11), en particulier brasé et/ou vissé et/ou assemblé par serrage au premier poinçon (11).

5. Installation de pressage selon l'une des revendications précédentes, **caractérisée en ce que** le deuxième élément de mesure (19) est relié de façon fixe au deuxième poinçon (12), en particulier brasé avec le deuxième poinçon (12).

6. Installation de pressage selon l'une des revendications 1 à 4, **caractérisée en ce que** le deuxième élément de mesure (19) est mobile par rapport au deuxième poinçon (12) mais au moins fixe en position pendant l'opération de pressage, en particulier peut être relié au deuxième poinçon (12) par l'intermédiaire de deux butées (21, 23) qui se correspondent.

7. Installation de pressage selon l'une des revendications précédentes, **caractérisée en ce que** l'installation de capteurs comprend un capteur de contact qui comporte de préférence une goupille de contact (18) supportée de façon mobile, pouvant de préférence être sortie de façon télescopique, lequel capteur de contact est de préférence disposé sur et/ou dans le premier poinçon (11).

8. Installation de pressage selon l'une des revendications précédentes, **caractérisée en ce qu'**une goupille centrale (20) est disposée à l'intérieur du premier poinçon (11) et/ou du deuxième (12), en particulier à l'intérieur du deuxième poinçon (12).

9. Installation de pressage selon l'une des revendications précédentes, **caractérisée en ce qu'**une goupille de mesure (19) est disposée à l'intérieur du premier poinçon (11) et/ou du deuxième (12), en particulier à l'intérieur du deuxième poinçon (12), de préférence à l'intérieur de la goupille centrale (20).

10. Installation de pressage selon la revendication 9, **caractérisée en ce que** la goupille de mesure (19) peut être déplacée à l'aide d'un entraînement de préférence hydraulique et/ou pneumatique et/ou électrique et/ou présente une butée (21) qui peut s'engager, en particulier pendant l'opération de pressage, avec une butée (23) correspondante du deuxième poinçon (12) et/ou de la goupille centrale (20).

11. Installation de pressage selon la revendication 9 ou 10, **caractérisée en ce que** la goupille centrale comporte une découpe (22), en particulier en forme de fente, de sorte qu'au moins un élément de butée (21) de la goupille de mesure (19) peut traverser la goupille centrale (20) de telle manière que l'élément de butée (21) de la goupille de mesure puisse buter sur une butée (23) du deuxième poinçon.

12. Installation de pressage selon l'une des revendications précédentes, **caractérisée en ce que** le premier élément de mesure (16) est ou peut être disposé au moins en partie à l'intérieur du premier poinçon (11), en particulier est ou peut être relié à une paroi intérieure du premier poinçon (11), et/ou **en ce que** le deuxième élément de mesure (19) est ou peut être disposé au moins en partie à l'intérieur du deuxième poinçon (12), en particulier est ou peut être relié à une paroi intérieure du deuxième poinçon (12).

13. Installation de pressage selon l'une des revendications précédentes, **caractérisée en ce que** le premier poinçon (11) et/ou le deuxième (12) peuvent être déplacés pour le pressage de la pièce pressée et/ou le deuxième poinçon reste dans une position fixe lors du pressage de la pièce pressée.

14. Installation de pressage selon l'une des revendications précédentes, **caractérisée en ce qu'**au moins une installation de commande, en particulier une installation de régulation, est prévue pour la commande, en particulier la régulation, du déplacement du premier poinçon (11) et/ou du deuxième (12), en particulier pendant une opération de pressage.

15. Installation de pressage selon l'une des revendications précédentes, **caractérisée en ce que** le premier poinçon (11) est un poinçon supérieur (11) et/ou le deuxième poinçon (12) est un poinçon inférieur (12).

16. Installation de pressage selon l'une des revendications précédentes, **caractérisée en ce qu'**au moins deux premiers poinçons (11a, 11b, 11c) sont prévus, le premier élément de mesure (16) étant de préférence disposé sur et/ou dans un premier poinçon (11a) situé sur l'intérieur et/ou plus long.

17. Installation de pressage selon l'une des revendications précédentes, **caractérisée en ce qu'**au moins deux deuxièmes poinçons (12a, 12b, 12c), en particulier poinçons inférieurs, sont prévus, le deuxième élément de mesure (19) étant de préférence disposé sur et/ou dans un deuxième poinçon (12a) situé sur l'intérieur et/ou plus long.

18. Procédé pour le pressage de poudre pour obtenir une pièce en poudre compactée, en particulier d'une pièce pressée en poudre de céramique et/ou d'une pièce pressée en poudre métallique, à l'aide d'une installation de pressage selon l'une des revendications précédentes, **caractérisé en ce que** l'installation de mesure mesure une position du premier poinçon (11) et/ou du deuxième (12), en particulier une position relative des deux poinçons (11, 12) l'un par rapport à l'autre, et le premier poinçon (11) et/ou le deuxième (12) sont déplacés, en particulier lors du pressage, en fonction de ce résultat.
